# EUROPÄISCHE PATENTANMELDUNG

(11) **EP 0 949 128 A2**
(43) Veröffentlichungstag der Anmeldung: **13.10.1999**
(21) Anmeldenummer: 99104521.2
(22) Anmeldetag: 06.03.1999
(51) Int. Cl.: B60R 25/02

(54) **Sicherungsvorrichtung für ein Lenkradschloss**

(30) Priorität: 06.04.1998 DE 19815311
(71) Anmelder: DaimlerChrysler AG, 70567 Stuttgart (DE)
(72) Erfinder: Schremmer, Gottfried, 71732 Tamm (DE)

(57) **Zusammenfassung**

Die Erfindung betrifft eine Sicherungsvorrichtung für ein an einem Mantelrohr (1) einer Lenkung eines Kraftfahrzeuges festgelegtes Lenkradschloß, mit einer mantelrohrfesten Aufnahme, an der ein Schloßgehäuse festgelegt ist, wobei Aufnahme und Schloßgehäuse fluchtende Bohrungen (2a) aufweisen, die von einem Sicherungsbolzen (4) durchsetzt sind.

Erfindungsgemäß ist der Sicherungsbolzen (4) von der Aufnahme und/oder dem Schloßgehäuse zumindest nahezu vollständig umgeben.

## Beschreibung

Die Erfindung betrifft eine Sicherungsvorrichtung für ein an einem Mantelrohr einer Lenkung eines Kraftfahrzeuges festgelegtes Lenkradschloß mit einer mantelrohrfesten Aufnahme, an der ein Schloßgehäuse festgelegt ist, wobei Aufnahme und Schloßgehäuse fluchtende Bohrungen aufweisen, die von einem Sicherungsbolzen durchsetzt sind, wobei der Sicherungsbolzen von der Aufnahme und/oder dem Schloßgehäuse zumindest nahezu vollständig umgeben ist.

Eine solche Sicherungsvorrichtung ist aus der DE 23 66 072 B2 bekannt. Das Lenkradschloß weist ein Schloßgehäuse auf, das mittels eines Sicherungsbolzens an einer Aufnahme des Mantelrohres festgelegt ist. Der Sicherungsbolzen ist schiebebeweglich gestaltet und in seiner Freigaberichtung durch eine Schraubenfeder und in seiner Sperrichtung durch eine elastische Lamelle belastet, die von außen mittels eines Werkzeuges betätigbar ist. Die elastische Lamelle kann größere Kräfte auf den Sicherungsbolzen ausüben als die Schraubenfeder, um den Sicherungsbolzen in seiner Sperrstellung halten zu können.

Aus der EP 0 094 568 A2 ist eine weitere Sicherungsvorrichtung für ein Lenkradschloß bekannt, deren Schloßgehäuse über einen Sicherungsstift in einer mantelrohrfesten Aufnahme festlegbar ist.

Aus der Patentschrift DE 36 26 014 C2 ist eine Sicherungsvorrichtung bekannt, die ein fest mit dem Mantelrohr einer Kraftfahrzeuglenkwelle verbundenes Gehäuseteil aufweist, auf das ein weiteres Gehäuseteil aufgesetzt ist. In den beiden Gehäuseteilen ist eine Steuerstange für einen Schloßriegel geführt, der in einer Sperrposition in einen an der Lenkwelle fixierten Lenkwellenrastring eingreift und so eine Drehung der Lenkwelle blokkiert. Die Gehäuseteile weisen einander überlappende Abschnitte auf, die von fluchtenden Bohrungen durchsetzt sind, durch die ein Sicherungsbolzen geführt ist. Der Sicherungsbolzen weist in einem mittleren Bereich eine Aussparung auf, in die der Schloßriegel insbesondere dann eingreift, wenn er sich in seiner die Lenkwelle blockierenden Sperrposition befindet. In dieser Stellung der genannten Sicherungsvorrichtung ist der Sicherungsbolzen formschlüssig gegen axiale Verschiebung gesichert, so daß er nicht entfernt werden kann. Der Sicherungsbolzen weist auf einer Seite ein Schraubengewinde auf, das aus den Gehäuseteilen herausragt, und auf das zur Sicherung eine Mutter aufgeschraubt ist.

Aufgabe der Erfindung ist es, eine Sicherungsvorrichtung der eingangs genannten Art zu schaffen, die eine zuverlässige befugte Entnahmemöglichkeit einerseits und einen sicheren Ausbauschutz gegen einen gewaltsamen Eingriff andererseits gewährleistet.

Diese Aufgabe wird dadurch gelöst, daß der Sicherungsbolzen einen ersten unrunden Abschnitt aufweist, an dem ein zwischen einer Sperrposition und einer Freigabeposition bewegbarer Schloßriegel außerhalb seiner Freigabeposition formschlüssig angreift und den Sicherungsbolzen blockiert, wobei der Sicherungsbolzen zwischen einer Verschiebestellung, in der er aus dem Schloßgehäuse entnehmbar ist, und einer Raststellung, in der er an einem gehäusefesten Anschlag blockiert ist, verdrehbar angeordnet ist. Dabei werden die Angriffsflächen, die der Sicherungsbolzen nach außen bietet, auf ein Minimum reduziert, wobei die Stirnseiten in das Gehäuse versenkt sind, so daß insbesondere ein gewaltsames Hindurchschlagen des Sicherungsbolzens in seiner Axialrichtung durch das Gehäuse weitgehend verhindert wird. Ferner wird ein Umgreifen des Sicherungsbolzens ausgeschlossen. Ein unbefugter Ausbau des Lenkradschlosses wird somit verhindert. Der Sicherungsbolzen weist eine im wesentlichen zylindrische Grundform auf. Der unrunde Abschnitt weicht von dieser Form ab und weist vorzugsweise eine oder mehrere ebene Angriffsflächen auf. An einem derartigen Abschnitt kann der Schloßriegel formschlüssig angreifen und eine Drehung und/oder eine axiale Verschiebung des Sicherungsbolzens verhindern. Dadurch läßt sich zum einen in der Raststellung des Sicherungsbolzens eine doppelte Fixierung für den Sicherungsbolzen erreichen, da sowohl der Schloßriegel, als auch der gehäusefeste Anschlag eine axiale Verschiebung des Sicherungsbolzens verhindern können. Zum anderen ist der Sicherungsbolzen nur in seiner Verschiebestellung aus dem Schloßgehäuse entnehmbar, die er ausgehend von der Raststellung durch ein Verdrehen erreicht, das aufgrund des formschlüssigen Angriffs des Schloßriegels an dem unrunden Abschnitt des Sicherungsbolzens mit gewaltsamen Mitteln sehr schwer oder gar nicht zu bewerkstelligen ist.

In Ausgestaltung der Erfindung weist der Sicherungsbolzen als ersten unrunden Abschnitt eine Aussparung auf, in die der Schloßriegel außerhalb seiner Freigabeposition eingreift, wobei ferner der Schloßriegel eine Aussparung aufweist, in die der Sicherungsbolzen außerhalb seiner Raststellung eingreift, wodurch der Schloßriegel in der Freigabeposition blockiert wird. Dadurch ergibt sich zwischen Schloßriegel und Sicherungsbolzen genau dann kein Eingriff, wenn sich der Schloßriegel in seiner Freigabeposition und der Bolzen in seiner Raststellung befinden. Aus dieser sogenannten "Neutralstellung" heraus ist wahlweise eines der beiden Sperrelemente bewegbar, wodurch das jeweils andere blockiert wird.

In weiterer Ausgestaltung der Erfindung weist der Sicherungsbolzen einen zweiten unrunden Abschnitt mit einem zu einer Drehachse exzentrisch abragenden Vorsprung auf, dem ein gehäusefester Anschlag zugeordnet ist. Der Vorsprung überragt die zylindrische Oberfläche des Sicherungsbolzens, so daß der Vorsprung des Sicherungsbolzens in Umfangsrichtung und/oder in Axialrichtung des Sicherungsbolzens gegen den Anschlag stoßen kann. Der Anschlag kann durch eine Einschuböffnung im Gehäuse mit einem dem zweiten unrunden Abschnitt des Sicherungsbolzens entsprechenden Querschnitt ausgeführt sein, so daß sich ein außerhalb der Verschiebestellung des Sicherungsbolzens wirkender Axialanschlag ergibt.

In weiterer Ausgestaltung der Erfindung ist der radial abragende Vorsprung als Bolzenkopf an einer Stirnseite des Sicherungsbolzens gestaltet, der in einer Aufnahmetasche angeordnet ist. Dabei weist die Aufnahmetasche zwei einander gegenüberliegende Wände auf, zwischen die der Bolzenkopf paßgenau einführbar ist. Dadurch läßt sich ein zweiseitig wirkender Axialanschlag zur vollständigen Festlegung des Sicherungsbolzens erzielen.

In weiterer Ausgestaltung der Erfindung sind an einer Stirnseite des Sicherungsbolzens Werkzeugangriffsflächen vorgesehen, die derart dimensioniert sind, daß durch ein angreifendes Werkzeug aufbringbare Kräfte geringer sind als die durch den Formschluß des Sicherungsbolzens und/oder des Schloßriegels definierten Gegenkräfte. Die Werkzeugangriffsflächen stellen vorzugsweise die einzige Möglichkeit zur Betätigung des Sicherungsbolzens dar und bilden gleichzeitig eine Sollbruchstelle oder eine Kraftbegrenzungsanordnung. Bei einem gewaltsamen Eingriff werden die Werkzeugangriffsflächen zerstört, nicht jedoch die im Gehäuse angeordneten wesentlichen Teile der Sicherungsvorrichtung. Darüber hinaus können die Werkzeugangriffsflächen in Verbindung mit der umschlossenen Unterbringung des Sicherungsbolzens im Schloßgehäuse auch zur Begrenzung der maximal einleitbaren Kräfte dienen, indem sie die Größe des angreifenden Werkzeuges begrenzen.

In weiterer Ausgestaltung der Erfindung sind die Werkzeugangriffsflächen innerhalb einer Aussparung in der Stirnseite des Sicherungsbolzens angeordnet. Dadurch kann der Sicherungsbolzen lediglich mit solchen Werkzeugen verdreht werden, die in die Aussparung einpaßbar sind. Dadurch ist das maximal einleitbare Drehmoment anhand des vorgesehenen Werkzeugquerschnitts abschätzbar und der Sicherungsbolzen läßt sich entsprechend dimensionieren.

Weitere Vorteile und Merkmale der Erfindung ergeben sich aus den Unteransprüchen. Nachfolgend ist ein bevorzugtes Ausführungsbeispiel der Erfindung beschrieben und anhand der Zeichnungen dargestellt.
- Fig. 1: zeigt ein Schloßgehäuse einer erfindungsgemäßen Sicherungsvorrichtung für ein Kraftfahrzeuglenkradschloß in einer Außenansicht von unten,
- Fig. 2: einen Schnitt entlang der Linie II-II durch das in eine Aufnahme eingesetzte Schloßgehäuse nach Fig. 1, wobei ein Schloßriegel in seiner Sperrposition dargestellt ist,
- Fig. 3a und 3b: zwei Ansichten eines Sicherungsbolzens der erfindungsgemäßen Sicherungsvorrichtung,
- Fig. 4: einen Schnitt entlang der Linie IV-IV durch die erfindungsgemäße Sicherungsvorrichtung nach Fig. 2, wobei eine Eingriffsanordnung zwischen dem Schloßriegel und dem in das Schloßgehäuse eingesetzten Sicherungsbolzen dargestellt ist,
- Fig. 5: die Sicherungsvorrichtung nach Fig. 4 in einer Ansicht in Richtung des Pfeiles V,
- Fig. 6: einen Abschnitt eines Mantelrohres einer Kraftfahrzeuglenkwelle einschließlich der Aufnahme der erfindungsgemäßen Sicherungsvorrichtung in einer perspektivischen Ansicht.

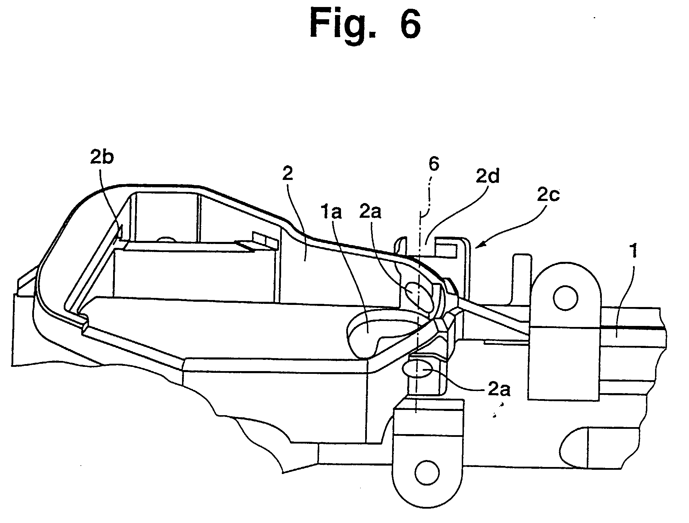

Wie insbesondere aus Fig. 6 entnehmbar ist, ist eine nicht dargestellte Lenkwelle eines Kraftfahrzeuges von einem Mantelrohr 1 umgeben, das eine einem nicht dargestellten Lenkwellenrastring zugeordnete Ausnehmung la aufweist. An dem Mantelrohr 1 ist eine die Ausnehmung la umgebende Aufnahme für ein Schloßgehäuse in Form einer Aufnahmekonsole 2 angebracht, die entweder einstückig oder unlösbar fest mit dem Mantelrohr 1 verbunden ausgeführt ist. Im Bereich der Ausnehmung la besitzt die Aufnahmekonsole 2 in Querrichtung des Mantelrohres 1 miteinander fluchtende Bohrungen 2a, während auf der den Bohrungen 2a in Axialrichtung des Mantelrohres gegenüberliegenden Seite der Aufnahmekonsole 2 eine Vertiefung 2b vorgesehen ist.

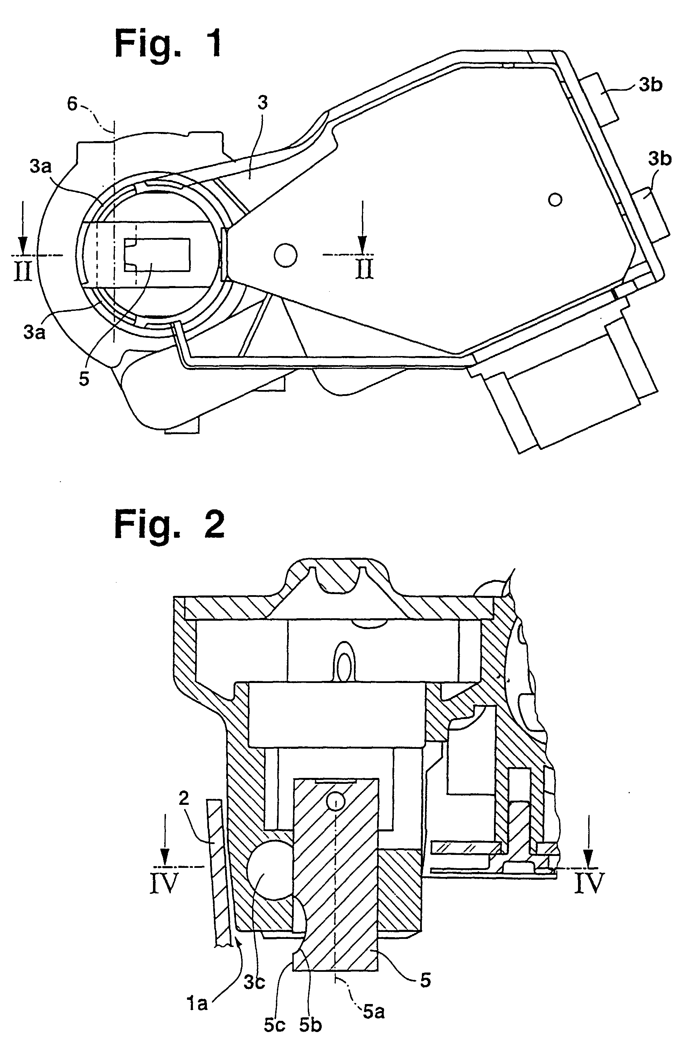

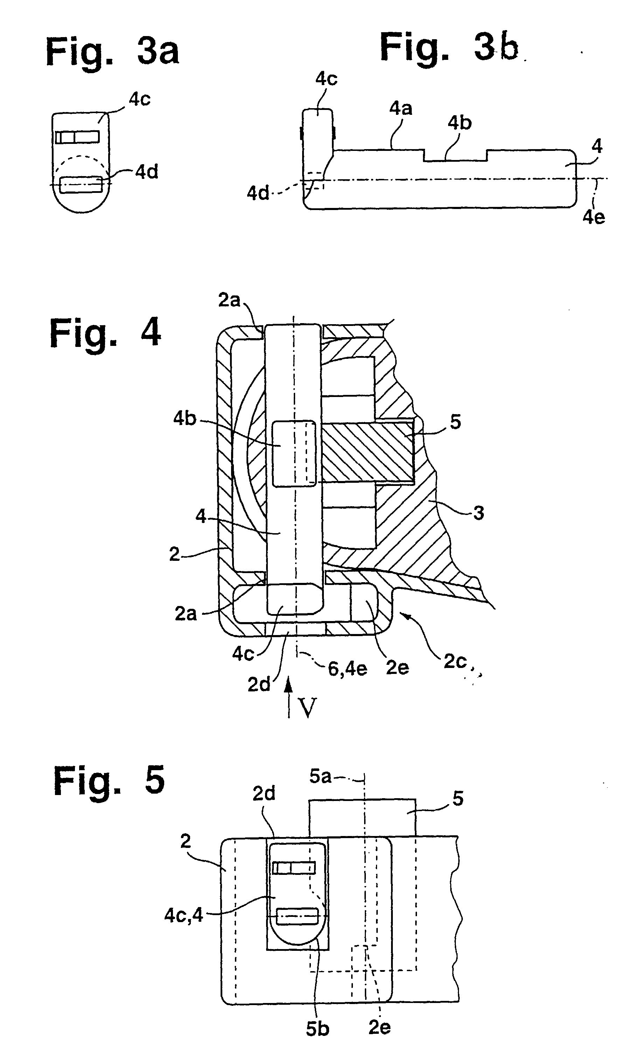

In die Aufnahmekonsole 2 ist ein in Fig. 1 dargestelltes Schloßgehäuse 3 derart einsetzbar, daß zwei Rastnasen 3b auf seiten des Schloßgehäuses 3 in die Vertiefung 2b der Aufnahmekonsole eingreifen und zwei Bohrungen 3a in einer Außenwand des Schloßgehäuses 3 mit den Bohrungen 2a in der Aufnahmekonsole wiederum fluchtend zu liegen kommen. Durch die fluchtenden Bohrungen 2a und 3a ist ein in den Fig. 3a bis 5 dargestellter Sicherungsbolzen 4 mit einer im wesentlichen zylindrischen Grundform entlang einer Führungs- und Drehachse 6 in die Aufnahme konsole und das Schloßgehäuse einführbar, wodurch das Schloßgehäuse in der Aufnahmekonsole festgelegt ist. Das Schloßgehäuse 3 beinhaltet u.a. ein Schließsystem, von dem lediglich ein motorgetriebener Schloßriegel 5 in den Zeichnungen dargestellt ist.

Der Schloßriegel 5 weist einen im wesentlichen durchgehenden Rechteckquerschnitt auf und ist entlang seiner quer zur Lenkwelle verlaufenden Hauptachse 5a zwischen einer Sperrposition und einer Freigabeposition verschiebbar angeordnet. In seiner in Fig. 2 dargestellten Sperrposition ragt der Schloßriegel 5 durch die Ausnehmung la im Mantelrohr 1 und greift in den Lenkwellenrastring ein, über den er die Lenkwelle drehfest arretiert. In seiner aus Fig. 5 entnehmbaren Freigabeposition ist der Schloßriegel 5 vollständig in das Schloßgehäuse 3 zurückgezogen, so daß er die Ausnehmung la nicht mehr durchgreift. Wenn sich der Schloßriegel 5 in seiner Freigabeposition befindet, korrespondiert eine konkave Ausnehmung 5b seitens des Schloßriegels 5 mit einer im wesentlichen zylindrischen Führung 3c für den Sicherungsbolzen 4 im Schloßgehäuse 3. Die Ausnehmung 5b ergänzt in dieser Position des Schloßriegels die Führung 3c zu einer den eingesetzten Sicherungsbolzen 4 an dieser Stelle vollständig umgebenden Führung mit zylindrischem Querschnitt. Dadurch läßt sich der Sicherungsbolzen 4 in der Freigabeposition des Schloßriegels 5 in beliebiger Weise durch die Bohrungen 2a, 3a und die Führung 3c bewegen. Bei einer Position des Schloßriegels 5 außerhalb der Freigabeposition greift an dieser Stelle seine flache, vordere Seitenfläche 5c in die Führung 3c ein.

Der Sicherungsbolzen 4 weist, wie bereits erwähnt, einen Körper 4a mit einer im wesentlichen zylindrischen Form auf, der mit geringen Spiel in die Bohrungen 2a, 3a sowie die korrespondierende Führung 3c einpaßbar ist. Die Zylinderachse 4e des Sicherungsbolzens 4 fällt im montierten Zustand mit der Führungsachse 6 zusammen. Ferner weist der Sicherungsbolzen in seiner Zylinderoberfläche 4a eine Aussparung 4b mit einer ebenen Stirnfläche auf, deren Längenausdehnung der Breite des Schloßriegels 5 entspricht, so daß der Schloßriegel derart in die Aussparung 4b eingreifen kann, daß seine vordere Seitenfläche 5c zur Anlage an der Aussparungsfläche 4b kommen kann. Des weiteren weist der Sicherungsbolzen 4 an einer Stirnseite einen zweiten unrunden Abschnitt in Form eines exzentrischen Kopfes 4c auf, der wie aus den Fig. 3a und 3b ersichtlich ist, von der Zylinderoberfläche 4a abragt. Außerdem ist stirnseitig eine unrunde Aussparung mit Werkzeugangriffsflächen in Form eines Schlitzes 4d zur Einleitung von Kräften vorgesehen.

Erfindungsgemäß erfolgt die Positionierung des Sicherungsbolzens 4 innerhalb der Aufnahmekonsole 2, wie aus Fig. 4 ersichtlich ist. Der vollständig eingesetzte Sicherungsbolzen 4 ist dabei allseitig von der Aufnahmekonsole 2 umgeben, wobei an der Aufnahmekonsole ein doppelwandiger Abschnitt in Form einer Aufnahmetasche 2c vorgesehen ist, die den Kopf des Sicherungsbolzens gesondert einschließt. Der Sicherungsbolzen 4 ist in vollständig eingesetztem Zustand im Bereich seiner vorderen Stirnseite nur durch einen Durchbruch 2d in der äußeren Wand zugänglich, der gerade so groß ist, daß der Kopf 4c des Sicherungsbolzens hindurchpaßt, wobei vorzugsweise der Querschnitt des Durchbruchs 2d mit der Kontur des Kopfes korrespondiert. Der Zwischenraum zwischen den Wänden des doppelwandigen Abschnitts 2c ist ferner so gestaltet, daß dem Sicherungsbolzen ausgehend von einer in den Fig. 4 und 5 dargestellten Verschiebestellung, in der er aus dem Schloßgehäuse entnehmbar ist, eine Drehung im 90° im Uhrzeigersinn gestattet wird. Durch die Drehung gelangt er in eine Raststellung, in der die Stirnflächen des Kopfes 4c weitgehend spielfrei zwischen die Wände der Aufnahmetasche 2c eingepaßt ist. In der Aufnahmetasche 2c ist ein Vorsprung 2e vorgesehen, der als Anschlag für den Kopf des Sicherungsbolzens dient und eine weitere Verdrehung verhindert.

Die Funktion der erfindungsgemäßen Sicherungsvorrichtung ergibt sich wie folgt. Bei geöffnetem Zündschloß befindet sich der Schloßriegel 5 in seiner Freigabeposition gemäß Fig. 5. In dieser Position des Schloßriegels läßt sich der Sicherungsbolzen 4 in die Aufnahmekonsole 2 sowie das darin eingesetzte Schloßgehäuse 3 einschieben bzw. daraus entnehmen. Der Durchbruch 2d in der Außenwand der Aufnahmekonsole bestimmt über den daran angepaßten Bolzenkopf 4c die Stellung des Bolzens 4, in der er in das Gehäuse einschiebbar ist. Ferner bildet die innenliegende Wand des Abschnitts 2c einen Axialanschlag für den Sicherungsbolzen 4, so daß dieser beim Einschieben in das Gehäuse in der aus Fig. 4 entnehmbaren Verschiebestellung blockiert wird. In dieser Stellung blockiert der Sicherungsbolzen 4 seinerseits eine Bewegung des Schloßriegels 5 in Richtung seiner Hauptachse 5a, da er mit seiner Zylinderoberfläche 4a formschlüssig in die Aussparung 5b eingreift.

Der Sicherungsbolzen 4 läßt sich ausgehend von dieser Verschiebestellung um 90° im Uhrzeigersinn drehen, so daß die Aussparung 4b auf seiten des Sicherungsbolzens direkt gegenüber der Aussparung 5b des Schloßriegels 5 zu liegen kommt. Aus dieser Konstellation von Sicherungsbolzen und Schloßriegel heraus, einer sogenannten Neutralstellung, ist einerseits der Schloßriegel in seine Sperrposition gemäß Fig. 2 verschiebbar und andererseits ist der Sicherungsbolzen in die Verschiebestellung gemäß den Fig. 4 und 5 drehbar.

Unter Belassen des Sicherungsbolzens in der Raststellung läßt sich also der Schloßriegel in die Sperrposition bewegen und somit das Lenkradschloß einrasten. Dabei ist der Sicherungsbolzen 4, sobald der Schloßriegel sich außerhalb der Freigabeposition befindet, unbeweglich im Schloßgehäuse und in der Aufnahmekonsole festgelegt, wobei zugleich eine Verschiebung des Sicherungsbolzens 4 in Richtung der Führungsachse 6 und ein Verdrehen des Sicherungsbolzens 4 um die Führungsachse 6 durch den in die Aussparung 4b eingreifenden Schloßriegel 5 verhindert wird.

Ein gewaltsames Hindurchschlagen des Sicherungsbolzens 4 durch das Gehäuse, beispielsweise mit einem Hammer, wird zum einen durch die doppelte, formschlüssige axiale Festlegung des Sicherungsbolzens 4 (über den Kopf 4c an der Aufnahmekonsole 2 und außerdem über die Aussparung 4b am Schloßriegel 5) und zum anderen durch die versenkte Anordnung des Sicherungsbolzens innerhalb der Aufnahmekonsole 2 erreicht. Dadurch wird üblichen Werkzeugen keine ausreichende Angriffsfläche geboten, so daß die in den Sicherungsbolzen 4 einleitbaren Stoßkräfte begrenzt sind.

Ein gewaltsames Verdrehen des Sicherungsbolzens 4 innerhalb seiner Lagerung ist wirksam dadurch verhindert, daß der Bolzenkopf 4c in der Aufnahmetasche 2c unzugänglich untergebracht ist, weil größeren Werkzeugen die Angriffsflächen entzogen sind. Der Schlitz 4d bietet somit die einzigen Werkzeugangriffsflächen und begrenzt das einleitbare Drehmoment deshalb, weil er die Größe des angreifenden Werkzeuges limitiert. Da aber die mittels kleiner Werkzeuge aufbringbaren Kräfte geringer sind als die durch den Formschluß von Sicherungsbolzen und Schloßriegel definierten Gegenkräfte läßt sich der Sicherungsbolzen nicht verdrehen.

In einem modifizierten Ausführungsbeispiel der erfindungsgemäßen Sicherungsvorrichtung ist der Kopf 4c des Sicherungsbolzens mit dem Schlitz 4d derart gestaltet, daß er bei einem definierten eingeleiteten Moment von dem zylindrischen Körper 4a des Sicherungsbolzens 4 abschert, wobei das definierte Moment geringer als das zur Zerstörung der Eingriffsbereiche von Sicherungsbolzen 4 und Schloßriegel 5 erforderliche Moment.

In einem weiteren modifizierten Ausführungsbeispiel der erfindungsgemäßen Sicherungsvorrichtung ist die unrunde Aussparung 4d als Innensechskant ausgeführt und versagt ebenfalls bei einem definierten Moment, das geringer ist als ein zur Zerstörung anderer Bereiche des Bolzens 4 erforderliches Moment.

Die erfindungsgemäße Sicherungsvorrichtung ermöglicht eine zuverlässige formschlüssige Festlegung des Schloßgehäuses 3 in der Aufnahmekonsole 2, wobei der als Befestigungselement dienende Sicherungsbolzen 4 bei eingerastetem Lenkradschloß nicht einmal mit gewaltsamen Mitteln entfernt werden kann, während er bei entsperrtem Lenkradschloß besonders einfach aus dem Gehäuse entnehmbar ist.

## Patentansprüche

1. Sicherungsvorrichtung für ein an einem Mantelrohr einer Lenkung eines Kraftfahrzeuges festgelegtes Lenkradschloß mit einer mantelrohrfesten Aufnahme (2), an der ein Schloßgehäuse (3) festgelegt ist, wobei Aufnahme und Schloßgehäuse fluchtende Bohrungen (2a, 3a) aufweisen, die von einem Sicherungsbolzen durchsetzt sind, wobei der Sicherungsbolzen (4) von der Aufnahme (2) und/oder dem Schloßgehäuse (3) zumindest nahezu vollständig umgeben ist,
**dadurch gekennzeichnet, daß**
der Sicherungsbolzen (4) einen ersten unrunden Abschnitt (4b) aufweist, an dem ein zwischen einer Sperrposition und einer Freigabeposition bewegbarer Schloßriegel (5) außerhalb seiner Freigabeposition formschlüssig angreift und den Sicherungsbolzen (4) blockiert, wobei der Sicherungsbolzen (4) zwischen einer Verschiebestellung, in der er aus dem Schloßgehäuse (3) entnehmbar ist, und einer Raststellung, in der er an einem gehäusefesten Anschlag blockiert ist, verdrehbar angeordnet ist.

2. Sicherungsvorrichtung nach Anspruch 1,
**dadurch gekennzeichnet, daß**
der Sicherungsbolzen (4) als ersten unrunden Abschnitt eine Aussparung (4b) aufweist, in die der Schloßriegel (5) außerhalb seiner Freigabeposition eingreift, und daß der Schloßriegel (5) eine Aussparung (5b) aufweist, in die der Sicherungsbolzen (4) außerhalb seiner Raststellung eingreift, wodurch der Schloßriegel (5) in der Freigabeposition blockiert wird.

3. Sicherungsvorrichtung nach einem der Ansprüche 1 oder 2,
**dadurch gekennzeichnet, daß**
der Sicherungsbolzen (4) einen zweiten unrunden Abschnitt mit einem zu einer Drehachse (6) exzentrisch abragenden Vorsprung (4c) aufweist, dem ein gehäusefester Anschlag (2e) zugeordnet ist.

4. Sicherungsvorrichtung nach Anspruch 3,
**dadurch gekennzeichnet, daß**
der radial abragende Vorsprung als Bolzenkopf (4c) an einer Stirnseite des Sicherungsbolzens (4) gestaltet ist, der in einer doppelwandigen Aufnahmetasche (2c) angeordnet ist.

5. Sicherungsvorrichtung nach einem der Ansprüche 1 bis 4,
**dadurch gekennzeichnet, daß**
an einer Stirnseite des Sicherungsbolzens (4) Werkzeugangriffsflächen (4d) vorgesehen sind, die derart dimensioniert sind, daß durch ein angreifendes Werkzeug aufbringbare Kräfte geringer sind als die durch den Formschluß des Sicherungsbolzens (4) und/oder des Schloßriegels (5) definierten Gegenkräfte.

6. Sicherungsvorrichtung nach Anspruch 5,
**dadurch gekennzeichnet, daß**
die Werkzeugangriffsflächen innerhalb einer Aussparung (4d) in der Stirnseite des Sicherungsbolzens (4) angeordnet sind.
